# EUROPÄISCHE PATENTANMELDUNG

(11) **EP 1 296 459 A1**
(43) Veröffentlichungstag der Anmeldung: **26.03.2003**
(21) Anmeldenummer: 01122489.6
(22) Anmeldetag: 20.09.2001
(51) Int. Cl.: H04B 1/707, H04Q 7/36

(54) **Verfahren zur Kanalkodierung in einem Funkkommunikationssystem**

(71) Anmelder: SIEMENS AKTIENGESELLSCHAFT, 80333 München (DE)
(72) Erfinder: Kroener, Hans, Dr., 73312 Geislingen (DE)

(57) **Zusammenfassung**

Unterschiedlichen Teilnehmern werden zueinander orthogonale Spreizcodes und zusätzlich ein Würfelcode zugewiesen. Zur Funkübertragung wird ein Antennensystem verwendet, das eine Strahlformung mit einer auf den jeweiligen Teilnehmer ausgerichteten Hauptkeule bewirkt. Mindestens in einem Teilbereich des von dem Antennensystem abgedeckten Bereichs wird Teilnehmern, deren Hauptkeulen sich überlappen, derselbe Würfelcode zugewiesen.

## Beschreibung

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation.

Verschiedenen Teilnehmern wird dabei ein Funkkanal zugeordnet, über den die Teilnehmersignale übertragen werden. Ein Funkkanal wird zum Beispiel durch einen schmalbandigen Frequenzbereich und einen Zeitschlitz gebildet. Da sich ein Teilnehmersignal in einem Funkkanal in Frequenz und Zeit von den übrigen Teilnehmersignalen unterscheidet, kann in diesem Fall die empfangene Funkstation eine Detektion der Daten des Teilnehmersignals vornehmen. In neueren Funkkommunikationssytemen, wie zum Beispiel dem UMTS-System, werden die einzelnen Teilnehmer darüber hinaus durch unterschiedliche Spreizcodes, die untereinander orthogonal sein können, unterschieden (siehe B. Walke, "Mobilfunknetze und ihre Protokolle", Bd. 1, Seite 68 bis 81, Teubner-Verlag 1988).

Bei einer hohen Zahl von Teilnehmern in ein- und derselben Funkzelle oder bei vielen hochbitratigen Verbindungen kann es vorkommen, dass die in einer Funkzelle verfügbaren, zueinander orthogonalen Spreizcodes nicht für alle Teilnehmer ausreichen. Um eine weitere Unterscheidung zwischen den Teilnehmern zu ermöglichen, werden in diesem Fall zusätzlich Würfelcodes, die in der Fachwelt vielfach als Scrambling Code bezeichnet werden, eingeführt (siehe zum Beispiel WCDMA for UMTS, Harry Holma, Antti Toskala, Seite 78 bis 80, John Wiley and Sons, 2000).

Da diese Würfelcodes untereinander nicht orthogonal sind, führen sie zu einer Störung der Orthogonalität, die die Trennung der unterschiedlichen Teilnehmersignale erschwert.

Der Erfindung liegt daher das Problem zugrunde, ein Verfahren zur Kanalkodierung in einem Funkkommunikationssystem anzugeben, bei dem die Unterscheidbarkeit der unterschiedlichen Teilnehmer verbessert ist.

Dieses Problem wird gelöst durch ein Verfahren gemäß Anspruch 1. Weitere Ausgestaltungen der Erfindung gehen aus den Unteransprüchen hervor.

In dem Verfahren wird zur Funkübertragung ein Antennensystem verwendet, das eine Strahlformung mit einer auf den jeweiligen Teilnehmer ausgerichteten Hauptkeule bewirkt. Ein derartiges Antennensystem ist beispielsweise ein Switched Beam, ein intelligentes Antennensystem, auch Smart-Antenna genannt, und/oder ein adaptives Antennensystem. Mit derartigen Antennensystemen wird das Empfangssignal und/oder das Signal/Rauschleistungsverhältnis pro Teilnehmer maximiert.

Unterschiedlichen Teilnehmern werden in dem Verfahren zueinander orthogonale Spreizcodes zugewiesen. Zusätzlich wird den Teilnehmern jeweils ein Würfelcode zugewiesen. Dabei wird mindestens in einem Teilbereich des von dem Antennensystem abgedeckten Bereichs Teilnehmern, deren Hauptkeulen sich überlappen, derselbe Würfelcode zugewiesen. Der von dem Antennensystem abgedeckte Bereich ist derjenige Raumwinkel, in den von dem Antennensystem Signale abgestrahlt werden.

Da Teilnehmer, deren Hauptkeulen sich überlappen, in dem Teilbereich denselben Würfelcode zugewiesen bekommen, wird für diese Teilnehmer die Orthogonalität der ihnen zugewiesenen Spreizcodes erhalten. Störungen beim Empfang der Signale werden so unterdrückt. Daher wird die Unterscheidbarkeit der Teilnehmersignale in dem Teilbereich deutlich verbessert.

Es liegt im Rahmen der Erfindung, den von dem Antennensystem abgedeckten Bereich in Sektoren zu unterteilen. Dabei werden den Teilnehmern, deren Hauptkeulen in denselben Sektor fallen, derselbe Würfelcode zugewiesen. Teilnehmern, deren Hauptkeulen in unterschiedliche Sektoren fallen, werden unterschiedliche Würfelcodes zugewiesen. Auf diese Weise wird eine mit geringem Rechenaufwand realisierbare Zuordnung der Würfelcodes zu den Teilbereichen des von dem Antennensystem abgedeckten Bereichs erzielt.

Ändert sich die Hauptkeule eines Teilnehmers so, dass sie in einen anderen Sektor fällt, so wird dem Teilnehmer der dem anderen Sektor entsprechende Würfelcode zugewiesen. Sollte die Kombination von Würfelcode und Spreizcode bereits vergeben sein, muß für den Teilnehmer zusätzlich der Spreizcode geändert werden.

Gemäß einer anderen Ausgestaltung der Erfindung werden die Teilbereiche des von dem Antennensystem abgedeckten Bereichs so definiert, dass die Teilbereiche, in denen den Teilnehmern derselbe Würfelcode zugeteilt wird, untereinander minimale Überlappung aufweisen. Auf diese Weise wird die Unterscheidbarkeit der empfangenen Signale weiter verbessert. Dabei ist zu berücksichtigen, daß die Menge der zueinander orthogonalen Codes limitiert ist.

Ändert sich die Lage der Hauptkeule eines Teilnehmers, so ist es vorteilhaft, den zugewiesenen Würfelcode zu überprüfen und gegebenenfalls neu zuzuweisen. Falls die sich dann für den Teilnehmer ergebende Kombination aus Würfelcode und Spreizcode bereits vergeben ist, ist es zusätzlich erforderlich, den Spreizcode des Teilnehmers neu zuzuweisen. Diese Änderung des zugewiesenen Würfelcodes kann durch unterschiedliche Ereignisse ausgelöst werden:

Gemäß einer Ausführungsform der Erfindung wird einem Teilnehmer ein neuer Würfelcode zugewiesen, sobald für diesen Teilnehmer eine andere Funkverbindung angefordert wird. Dieses ist etwa dann der Fall, wenn der Teilnehmer auf Grund seiner Bewegung in den Bereich einer anderen Funkzelle gelangt.

Alternativ wird einem Teilnehmer ein neuer Würfelcode zugewiesen, sobald für einen anderen Teilnehmer eine Funkverbindung freigegeben wird. Dieses ist beispielsweise der Fall, wenn der Teilnehmer eine Funkzelle verlassen hat.

Gemäß einer weiteren Ausführungsform wird einem Teilnehmer ein neuer Würfelcode zugewiesen, sobald sich die Überlappung seiner Hauptkeule mit anderen Hauptkeulen ändert. Dieses kann auf Grund veränderter Funkbedingungen der Fall sein.

Eine weitere Möglichkeit besteht darin, den einem Teilnehmer zugewiesenen Würfelcode periodisch zu überprüfen und, falls erforderlich, neu zuzuweisen. Dieses Verfahren ist mit geringem Signalisierungsaufwand verbunden.

Üblicherweise umfasst das Funkübertragungssystem ein Basisstationssystem, das bei neueren Systemen als Node B bezeichnet wird, und eine Funknetzsteuerung, die bei neueren Systemen als Radio Network Controller (RNC) bezeichnet wird. Die Strahlformung des Antennensystems erfolgt in dem Basisstationssystem. Die Zuweisung der Spreizcodes und der Würfelcodes erfolgt durch die Funknetzsteuerung. Das Basisstationssystem übermittelt der Funknetzsteuerung jeweils eine Information bezüglich der auf den jeweiligen Teilnehmer ausgerichteten Hauptkeule, so dass die Funknetzsteuerung auf Grund dieser Information den Spreizcode und den Würfelcode zuweisen kann.

Dabei liegt es im Rahmen der Erfindung, dass das Basisstationssystem zum Beispiel im Fall einer Änderung der Lage einer Hauptkeule, an die Funknetzsteuerung eine Signalisierungsnachricht zur Anforderung einer Änderung des Würfelcodes sendet.

Im Folgenden wird die Erfindung anhand eines Beispiels, das in den Figuren dargestellt ist, näher erläutert.

Figur 1 zeigt die Verteilung von Würfelcodes für einen in Sektoren unterteilten Bereich, wobei unterschiedlichen Sektoren unterschiedliche Würfelcodes zugewiesen werden.

Figur 2 zeigt die Zuordnung von Würfelcodes für Teilbereiche, die untereinander minimale Überlappung aufweisen.

Figur 3 zeigt den Signalisierungsverkehr zur Zuordnung von Würfelcodes.

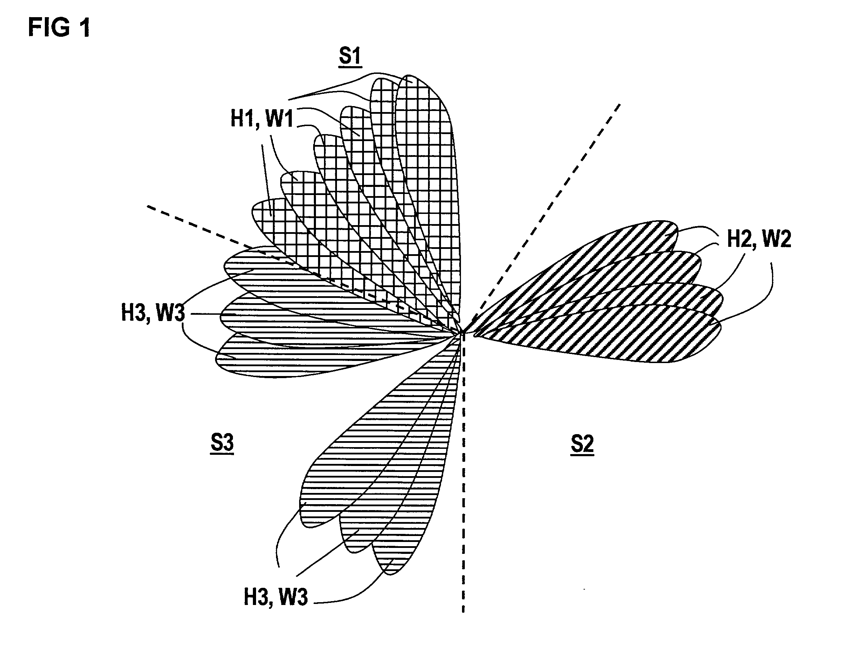

Ein Antennensystem, zum Beispiel ein intelligentes Antennensystem, ein adaptives Antennensystem oder ein Switched BeamAntennensystem, strahlt in einen Raumwinkel aus, der in drei Sektoren S1, S2, S3 unterteilt wird (siehe Figur 1).

Für jeden Teilnehmer werden Teilnehmersignale mit einer solchen Richtcharakteristik ausgestrahlt, dass eine Hauptkeule auf den Teilnehmer gerichtet ist, in der das Empfangssignal und/oder das Signal/Rauschleistungsverhältnis maximiert ist. Teilnehmern, deren Hauptkeulen H1 innerhalb des ersten Sektors S1 liegen, wird ein erster Würfelcode W1 zugeteilt. Teilnehmern, deren Hauptkeule H2 im zweiten Sektor S2 liegen, wird ein zweiter Würfelcode W2 zugeteilt. Teilnehmern, deren Hauptkeule H3 innerhalb des dritten Sektors S3 liegt, wird ein dritter Würfelcode W3 zugeteilt.

Verändert sich eine der Hauptkeulen Hi, i=1,2,3, so, dass sie in einem anderen der Sektoren zu liegen kommt, so wird dem zugehörigen Teilnehmer der dem neuen Sektor S1, S2, S3 entsprechende Würfelcode W1, W2, W3 zugeteilt.

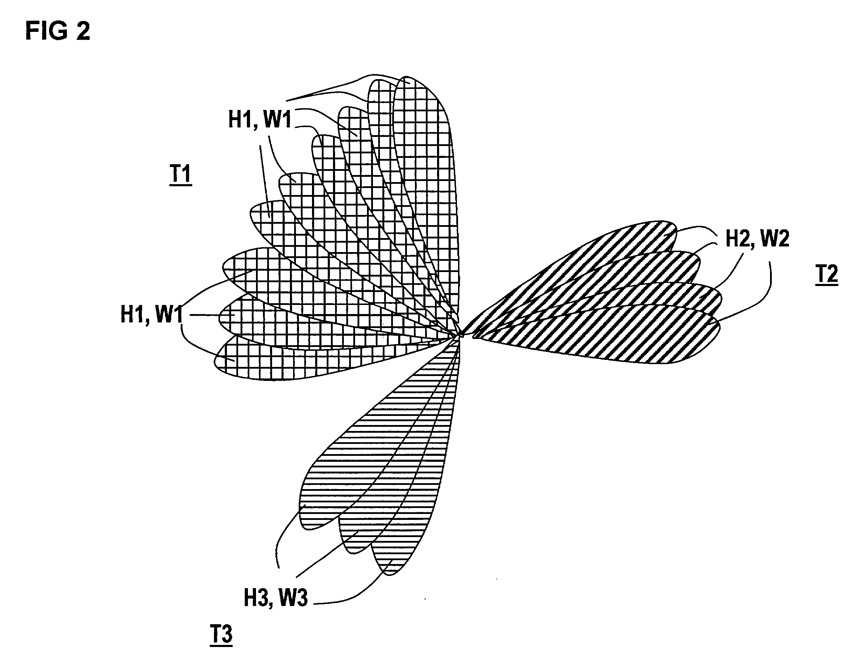

In einem zweiten Beispiel wird der Raumwinkel, in den ein Antennensystem, zum Beispiel eine intelligente Antenne, eine adaptive Antenne oder eine Switched BeamAntenne, ausstrahlt, in Teilbereiche T1, T2, T3 unterteilt, die sich dadurch auszeichnen, dass Hauptkeulen H1, H2, H3, die in die Teilbereiche T1, T2, T3 fallen, untereinander minimal überlappen. Teilnehmern mit Hauptkeulen Hi, i=1 bis 3, wird dabei je Teilbereich Ti, i=1,2,3 jeweils ein Würfelcode Wi, i=1,2,3 zugeordnet. Auf diese Weise sind die Teilnehmersignale von Teilnehmern, deren Hauptkeulen Hi in einen Teilbereich Ti fallen, auf Grund der den Teilnehmern zugeordneten, orthogonalen Spreizcodes, orthogonal. Da keine Überlappung zwischen den verschiedenen Teilbereichen Ti auftritt, wird eine Störung auf Grund nicht orthogonaler Anteile der Empfangssignale vermieden (siehe Figur 2).

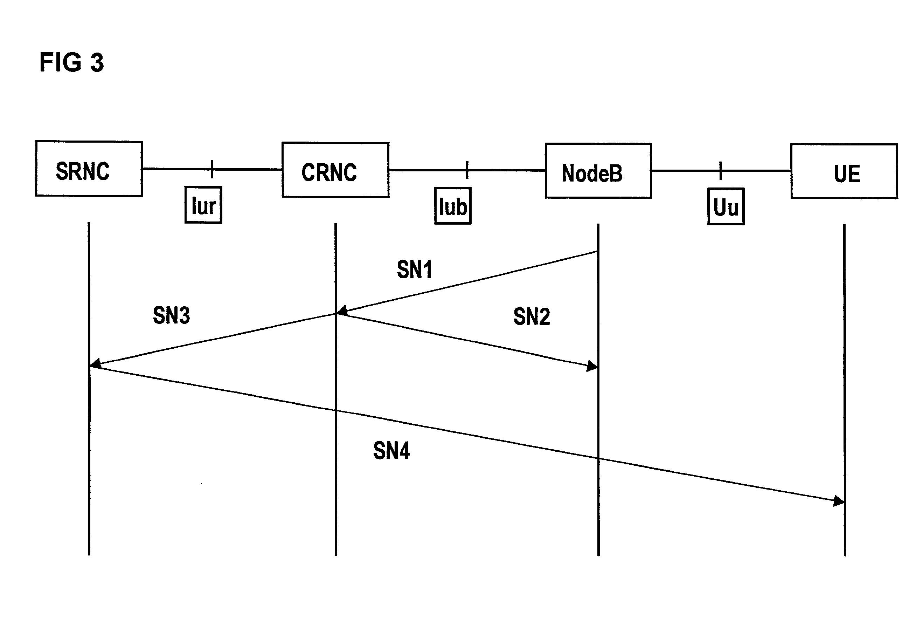

Zur Zuweisung eines Würfelcodes für einen Teilnehmer UE wird von einem Basisstationssytem Node B, das mit dem Teilnehmer UE über eine Schnittstelle Uu kommuniziert, über eine Schnittstelle Iub einer Steuereinheit einer Funknetzsteuerung CRNC eine Anforderung zur Änderung des Würfelcodes gesandt. Mit dieser Anforderung wird eine Kennung zur Identifizierung der Funkverbindung und eine Liste möglicher Würfelcodes übermittelt. Dieses erfolgt mit Hilfe einer Signalisierungsnachricht SN1 (siehe Figur 3). Daraufhin sendet die Steuereinheit CRNC eine Anforderung zur Neukonfiguration der Funkverbindung an die Basisstation Node B, die eine Information über den in Abwärtsrichtung zwischen Basisstation Node B und Teilnehmer UE zu verwendenden Code enthält. Dieses erfolgt über eine Signalisierungsnachricht SN2.

Darüber hinaus übermittelt die Steuereinheit CRNC eine Signalisierungsnachricht SN3 an eine Signalisierungseinheit SRNC der Funknetzsteuerung, mit der eine Neukonfigurierung des physikalischen Kanals angefordert wird. Die Signalisierungsnachricht SN3 enthält unter Anderem die Information über den in Abwärtsrichtung zu verwendenden orthogonalen Spreizcode und Würfelcode.

Die Signalisierungseinheit SRNC sendet dem Teilnehmer UE eine vierte Signalisierungsnachricht SN4, mit der der physikalische Kanal rekonfiguriert wird und dem Teilnehmer UE der neue Würfelcode und orthogonale Spreizcode zugeteilt wird.

Die erste Signalisierungsnachricht SN1 kann beispielsweise innerhalb des für UTRAN spezifizierten NBAP-Protokoll (siehe UTRAN Iub Interface NBAP Signalling, TS 25.433, version 3.4.1, December 2000) erfolgen. Dabei wird die Funkverbindung durch den sogenannten Radio Link ID identifiziert und es wird eine Liste möglicher Würfelcodes mitgeteilt. Basierend auf dieser Information, wird die Steuereinheit CRNC ein neues Paar von Würfelcode und Spreizcode, das in der entsprechenden Zelle noch nicht verwendet wird, bestimmen. Diese Information wird mit der zweiten Signalisierungsnachricht SN2 beispielsweise im Rahmen des NBAP-Protokolls (siehe UTRAN Iub Interface NBBAP Signalling, TS 25.433, version 3.4.1, December 2000) zwischen der Basisstation Node B und der Steuereinheit CRNC übertragen. Zwischen der Steuereinheit CRNC und der Signalisierungseinheit SRNC wird diese Information zum Beispiel innerhalb des RNSAP-Protokolls (siehe UTRAN Iur Interface RNSAP Signalling, TS 25.423, version 3.4.0, December 2000) über die Schnittstelle Iur übertragen. Die vierte Signalisierungsnachricht SN4 wird beispielsweise über das RRC-Protokoll (siehe RRC Protocol Specification, TS 25.331, version 3.5.0, December 2000) zwischen der Signalisierungseinheit SRNC und dem Teilnehmer UE übertragen.

Das Verfahren kann in allen, orthogonalen Spreizcodes verwendenden Systemen mit intelligenten Antennensystemen eingesetzt werden. Es kann insbesondere im IS-95-System und im USTS-System, das für FDD UMTS vorgeschlagen wurden, eingesetzt werden.

## Patentansprüche

1. Verfahren zur Kanalkodierung in einem Funkkommunikationssystem,
- bei dem unterschiedlichen Teilnehmern zueinander orthogonale Spreizcodes zugewiesen werden,
- bei dem den Teilnehmern jeweils zusätzlich ein Würfelcode zugewiesen wird,
- bei dem zur Funkübertragung ein Antennensystem verwendet wird, das eine Strahlformung mit einer auf den jeweiligen Teilnehmer ausgerichteten Hauptkeule bewirkt,
- bei dem mindestens in einem Teilbereich des von dem Antennensystem abgedeckten Bereichs Teilnehmern, deren Hauptkeulen sich überlappen, derselbe Würfelcode zugewiesen wird.

2. Verfahren nach Anspruch 1,
- bei dem der von dem Antennensystem abgedeckte Bereich in Sektoren unterteilt wird,
- bei dem den Teilnehmern, deren Hauptkeule in denselben Sektor fallen, derselbe Würfelcode zugewiesen wird,
- bei dem den verschiedenen Sektoren unterschiedliche Würfelcodes zugewiesen werden.

3. Verfahren nach Anspruch 2,
- bei dem einem Teilnehmer, dessen Hauptkeule sich so verändert, dass sie in einen anderen Sektor fällt, der dem anderen Sektor entsprechende Würfelcode zugewiesen wird.

4. Verfahren nach Anspruch 1,
- bei dem sich die Teilbereiche des von dem Antennensystem abgedeckten Bereichs, in denen den Teilnehmern derselbe Würfelcode zugeteilt wird, untereinander minimale Überlappung aufweisen.

5. Verfahren nach Anspruch 4,
- bei dem einem Teilnehmer, dessen Überlappung mit anderen Teilnehmern mit unterschiedlichem Würfelcode zunimmt, der diesen Teilnehmern zugeordnete Würfelcode zugewiesen wird.

6. Verfahren nach einem der Ansprüche 1 bis 5,
- bei dem einem Teilnehmer ein neuer Würfelcode zugewiesen wird, sobald für den Teilnehmer eine andere Funkverbindung angefordert wird.

7. Verfahren nach einem der Ansprüche 1 bis 5,
- bei dem einem Teilnehmer ein neuer Würfelcode zugewiesen wird, sobald für einen anderen Teilnehmer eine Funkverbindung freigegeben wird.

8. Verfahren nach einem der Ansprüche 1 bis 5,
- bei dem einem Teilnehmer ein neuer Würfelcode zugewiesen wird, sobald seine Hauptkeule eine andere Hauptkeule überlappt.

9. Verfahren nach einem der Ansprüche 1 bis 5,
- bei dem der einem Teilnehmer zugewiesene Würfelcode periodisch überprüft und, falls erforderlich, neu zugewiesen wird.

10. Verfahren nach einem der Ansprüche 1 bis 9,
- bei dem das Funkübertragungssystem ein Basisstationssystem und eine Funknetzsteuerung aufweist,
- bei dem die Strahlformung in dem Basisstationssystem erfolgt,
- bei dem das Basisstationssystem der Funknetzsteuerung eine Information bezüglich der auf den jeweiligen Teilnehmer ausgerichteten Hauptkeule übermittelt,
- bei dem die Zuweisung der Spreizcodes und der Würfelcodes durch die Funknetzsteuerung erfolgt.

11. Verfahren nach Anspruch 10,
- bei dem das Basisstationssystem an die Funknetzsteuerung eine Signalisierungsnachricht zur Anforderung einer Änderung des Würfelcodes sendet.

12. Verfahren nach einem der Ansprüche 1 bis 11,
- bei dem das Antennensystem ein Switched Beam Antennensystem, ein intelligentes Antennensystem und/oder ein adaptives Antennensystem umfasst.
